# EUROPEAN PATENT SPECIFICATION

(11) **EP 2 201 243 B1**
(45) Date of publication and mention of the grant of the patent: **02.03.2011**
(21) Application number: 08784434.6
(22) Date of filing: 29.08.2008
(51) Int. Cl.: F03D 1/06, F03D 7/02, F03D 11/00

(54) **BLADE FOR A ROTOR OF A WIND TURBINE PROVIDED WITH BARRIER GENERATING MEANS**
SCHAUFEL FÜR EINEN ROTOR EINER WINDTURBINE, DIE MIT EINEM SPERRENERZEUGUNGSMITTEL VERSEHEN IST
PALE DE ROTOR POUR ÉOLIENNE DOTÉE DE MOYENS GÉNÉRATEURS DE BARRIÈRE

(30) Priority: 29.08.2007 EP 07388060
(43) Date of publication of application: 30.06.2010
(73) Proprietor: LM GLASFIBER A/S, 6000 Kolding (DK)
(72) Inventor: FUGLSANG, Peter, DK-7100 Vejle (DK); BOVE, Stefano, DK-6640 Lunderskov (DK)
(74) Representative: Jensen, Peter Kim
(86) International application number: PCT/DK2008/000311
(87) International publication number: WO 2009/026927

(56) References cited:
- WO-A-00/15961
- WO-A-02/08600
- WO-A-03/016713
- WO-A-2005/035978
- WO-A-2007/065434
- GB-A- 885 449
- WETZEL K K ET AL: "INFLUENCE OF VORTEX GENERATORS ON NREL S807 AIRFOIL AERODYNAMIC CHARACTERISTICS AND WIND TURBINE PERFORMANCE" WIND ENGINEERING, MULTI-SCIENCE PUBLISHING CO., BRENTWOOD, ESSEX, GB, vol. 19, no. 3, 1 January 1995 (1995-01-01), pages 157-165, XP000516437 ISSN: 0309-524X

## Description

### Technical Field

The present invention relates to a blade for a rotor of a wind turbine having a substantially horizontal rotor shaft, said rotor comprising a hub, from which the blade extends substantially in a radial direction when mounted to the hub, the blade comprising: a profiled contour including a leading edge and a trailing edge as well as a pressure side and a suction side, the profiled contour when being impacted by an incident airflow generating a lift, wherein the profiled contour is divided into: a root region with a substantially circular profile closest to the hub, an airfoil region with a lift generating profile furthest away from the hub, and a transition region between the root region and the airfoil region, the profile of the transition region gradually changing in the radial direction from the circular profile of the root region to the lift generating profile of the airfoil region.

### Background

Horizontal axis wind turbines comprise a rotor provided with a number of blades - often two or three - which extend radially from a hub. The blades have a profile transversely to the longitudinal or radial direction of the blade. The blade comprises a root region with a substantially circular profile closest to the hub, an airfoil region with a lift generating profile furthest away from the hub, and a transition region between the root region and the airfoil region, the profile of the transition region gradually changing in the radial direction from the circular profile of the root region to the lift generating profile of the airfoil region. The lift generating profile is provided with a suction side and a pressure side as well as a leading edge and a trailing edge, so that the blade during normal use, i.e. wind-powered rotation of the rotor, is impacted by an incident airflow flowing from the leading edge towards the trailing edge, thereby generating a reduced pressure at the suction side (at a leeward side) relative to the pressure side (at a windward side) so that a pressure differential is created between the suction side and the pressure side, thus generating a lift.

Ideally, the airflow remains attached to the surface of the blade over the entire longitudinal length of the blade. However, in practice the airflows may detach at the suction side of the blade, which may cause increased drag, reduced lift, and thereby lead to a decrease in energy production. This airflow detachment usually occurs in the transverse direction between a position of maximum thickness and the trailing edge of the profile and typically occurs at the root region or transition region, where the profile is non-ideal and has the largest relative blade thickness.

The flow detachment may entail substantially stagnant vortices of airflow, which due to the rotational forces of the rotor may propagate towards the tip end of the blade. These cross-flows of detached airflow can seriously impair the functionality of the blade by reducing the lift over a larger longitudinal extent of the blade.

WO 2005/035978 which is considered as the closest prior art to the subject matter of claim 1, discloses a blade which is provided with a planar element protruding from the suction side of the blade and extending from the leading edge to the trailing edge of the blade. The planar element Is arranged in a zone of transversal flow in order to prevent the transversal flow from propagating towards the tip end of the blade.

WO 02/08600 discloses a wind turbine blade with a rib mounted in the root section. In one embodiment vane vortex generators are arranged on the pressure side of the blade in the transition region of the blade.

WO 00/15961 discloses a wind turbine blade with delta shaped vortex generators.

Wetzel K K et al.: "Influence of vortex generators on NREL S807 Airfoil Aerodynamic Characteristics and Wind Turbine Performance". Wind Engineering, Vol. 19, no.3, pages 157-165, describes the use of wishbone shaped vortex genearators for wind turbine blades.

WO 03/016713 discloses a small wind power generator having planar blades provided with a barrier member arranged at a rear surface of the blade at the forward direction of the blade.

WO 2007/065434 discloses a wind turbine blade provided with surface indentations in the root region and transition of the blade in order to reduce drag on these sections.

GB 885,449 discloses an airfoil provided with means for injecting Jets of fluid so as to re-energise the boundary layer of a fluid flow past the airfoil.

### Disclosure of the Invention

It is an object of the Invention to obtain a new blade for a rotor of a wind turbine, which overcomes or ameliorates at least one of the disadvantages of the prior art or which provides a useful alternative.

According to a first aspect of the Invention, the object is obtained by a first barrier generating means being arranged on the suction side of the blade in the transition region or in the airfoil region in a part nearest the transition region, the first barrier generating means being adapted to generating a barrier of airflow along a first strip, which extends essentially in a transverse direction of the blade on the suction side of the blade. Thus, the first barrier generating means are arranged in a zone comprising the transition region and a part of the airfoil region nearest the transition region. Preferably, the first barrier means are arranged in a first zone positioned in a zone of a cross-flow. This cross-flow may be inherent to the design of the blade during use of the blade. In a wind turbine rotor. The barrier of airflow must be of sufficient strength and length so as to effectively reduce the cross-flow. Cross-flows arising in a region of detached airflow, for instance due to pressure differentials caused by different incident airflow speeds at different blade radil, and which especially arise in the area of the blade root, can thereby be reduced or prevented by the barrier of airflow preventing the cross-flows from passIng the first zone. Thereby, it is possible to prevent a detached flow from propagating in the longitudinal or radial direction of the blade towards the blade tip and especially preventing the detached flow from propagating along the profiled region of the blade.

According to a first advantageous embodiment, the first strip has a width, which lies in an interval between 20 cm and 2 m, or between 25 cm and 1.5 m, or between 30 cm and 1 m. Typically, the longitudinal extent of the strip is about 50 cm. According to a second advantageous embodiment, the first barrier generating means are with no barrier generating means on radial sides of the first barrier generating means, i.e. no barrier generating means abut the first strip or the first barrier generating means. The use of barrier generating means may increase the drag (and in some cases even the lift to drag ratio) of the blade in the zone, in which the barrier generating means is arranged. By arranging the barrier generating means in strips only, it is ensured that the barrier generating means only increases the drag in a small region of the blade.

According to yet another advantageous embodiment, the first zone and optional additional zones (or equivalently the first strip and an optional additional strip) are positioned within the inner 50% of the blade, or the inner 35% of the blade, or even the inner 25% of the blade, i.e. within a radial distance of 50%, 35%, or 25% of the blade length from the hub. This is related to the fact that the airfoil part, which typically starts at the position of the maximum chord length, typically is located at a radial distance from the root of about 20% of the blade length. According to an alternative embodiment, said part of the airfoil region nearest the transition zone has a longitudinal extent of up to and including 3 meters, or 2 meters, or 1.5 meters or 1 meter.

According to an advantageous embodiment, the first barrier generating means is arranged in the transition region only. Thereby, the barrier generating means does not impair the functionality of the airfoil region of the blade. Preferably, the barrier generating means is arranged so that a cross-flow of detached flow does not propagate into the airfoil region.

According to a preferred embodiment, the barrier generating means is adapted to generate a barrier of airflow extending at least from an area of maximum relative profile thickness and the trailing edge of the blade. I.e. the barrier extends at least from an area corresponding to the position of maximum thickness (or equivalently the position of the maximum thickness-to-chord ratio) of an airfoil profile to the trailing edge. Thereby, the barrier generating means effectively prevents cross-flows running on the suction side of the blade through this region of the profile, where separation usually occurs and which - partly due to the centrifugal force - can propagate toward the blade tip.

According to another embodiment, the barrier generating means is adapted to generate a barrier of airflow extending substantially from the leading edge to the trailing edge of the blade.

According to yet another embodiment, the blade further comprises an additional barrier generating means arranged on the suction side of the blade in the transition region or in the airfoil region in a part nearest the transition region, the additional barrier generating means being adapted to generating a barrier of airflow along an additional strip, which extends essentially in a transverse direction of the blade on the suction side of the blade. Preferably, the additional barrier generating means are arranged in an additional zone positioned in a zone of an additional cross-flow, which is generated in a radius beyond the first zone (or the first strip), i.e. further from the hub. This cross-flow may be inherent to the design of the blade during use of the blade in a wind turbine rotor. The blade may of course also have a third zone or third strip with a third barrier generating means. The arrangement of the additional barrier generating means (and the third barrier generating means) of course also may correspond to the previously mentioned embodiments relating to the first barrier generating means.

In a first embodiment according to the invention, the first barrier generating means and/or the second barrier generating means comprise a number of turbulence generating means, such as a number of vortex generators. Thus, a barrier of coherent turbulent structures, i.e. vortices propagating at the surface of the blade towards the trailing edge, can be generated in the first zone and/or the additional zone by the use of passive flow control devices, the barrier preventing the cross-flow from propagating beyond the respective zones. Preferably, the number of turbulence generating means is adapted to provide vortices with a size, such as a height, corresponding to the size, such as the height, of the cross-flow. That is, the height of the vortices should be at least as large as the height of the cross-flow or the height of the separation or detachment from the separated or detached flow, in order to prevent the cross-flow from crossing the first strip. According to another embodiment, the height of the generated vortices is substantially identical to the height of a boundary layer of the airflow across the blade.

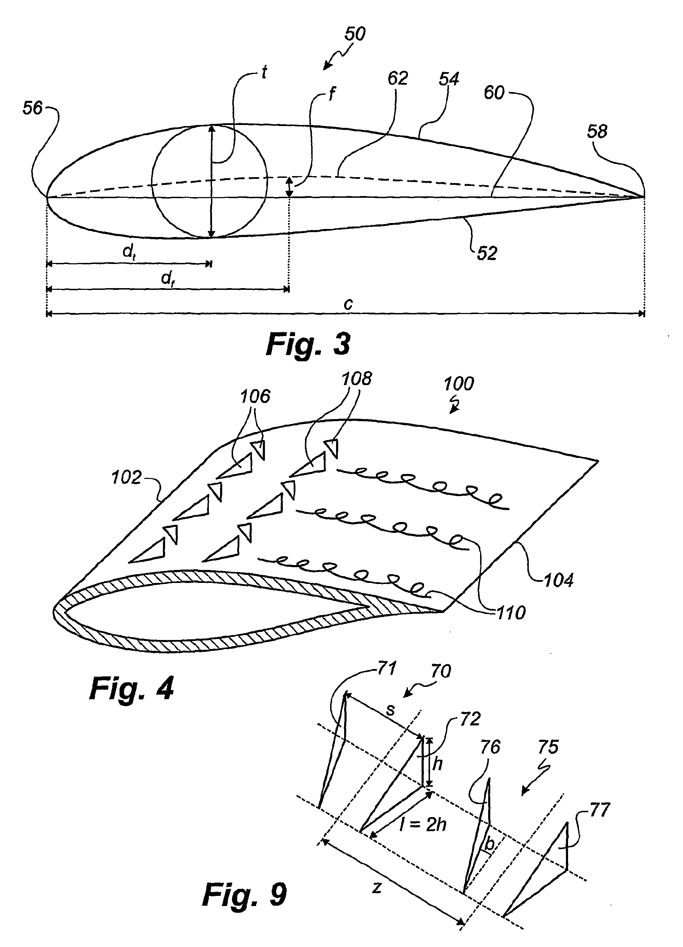

According to an advantageous embodiment, the turbulence generating means consists of two pair of vane vortex generators. This embodiment provides a barrier of airflow, which has a sufficient strength and width to prevent the cross-flow of separated airflow from propagating in the radial direction of the blade. The vane vortex generators may be arranged according to the description accompanying Fig. 9 of the detailed description.

Therefore, the size and/or shape of the turbulence generating means or vortex generators should be chosen in order to provide a turbulent flow with a height, which functions as a barrier in order to efficiently prevent the cross-flow. It must be noted here that the vortex generators typically generate vortices, which grow in height towards the trailing edge of the blade.

In another embodiment according to the invention, the first barrier generating means and/or the second barrier generating means comprise a number of boundary layer control means. Thus, the boundary layer control means can create a belt of attached flow, which acts as a barrier to a separated cross-flow by "catching" the cross-flow.

In yet another embodiment according to the invention, the boundary layer control means comprises a number of ventilation holes for blowing, such as air jets or blowing jets, or suction between an interior of the blade and an exterior of the blade. Thereby, a particularly simple solution for creating the belt of attached flow is provided. The air vented from the ventilation holes are used to energise and re-energise the boundary layer in order to maintain the flow attached to the exterior surface of the blade.

The ventilation holes may be arranged substantially tangentially to the contour of the blade. This can be achieved by the blade having a contour with a thickness that has a number of stepwise reductions towards the trailing edge of the blade. The holes can also be oriented with an angle compared to the contour of the blade. However, the holes should not be oriented normally to the contour, since this would generate a new separated flow, which can propagate towards the tip end of the blade. Therefore, the holes are preferably oriented with a gradient towards the trailing edge of the blade in order to ensure that the vented air propagates substantially towards the trailing edge instead of towards the tip end of the blade.

According to another embodiment, the first barrier generating means and/or the second barrier generating means comprise a slat arranged at the leading edge of the blade. The slat usually points downwards, i.e. towards the pressure side of the blade, and is utilised to create a local change in the inflow angle and airfoil lift, thereby causing the flow to remain attached to the surface of the blade. This attached "tunnel" for the flow creates a barrier where the cross-flow is caught and thus forced to join the attached flow towards the trailing edge instead of flowing outwards towards the tip end. Therefore, the slat can also be perceived as a boundary layer control means.

According to a preferred embodiment, the first zone and/or the additional zone are arranged in the airfoil region in a part nearest the hub. That is, the zone is located just beyond the transition zone. This is efficient for interrupting an already extant cross-flow coming from the root area.

According to another preferred embodiment, the first zone and/or the second zone are arranged in the transition zone. Due to the special conditions relating to blades for wind turbines, the interfering cross-flows especially arise in this region of the blade. The zones with barrier generating means thus prevent the cross-flows from propagating towards the blade tip.

In another embodiment according to the invention, the first zone and/or the second zone comprise a Gurney flap arranged at the trailing edge and on the pressure side of the blade. This may further improve the performance of the blade. Usually the Gurney flap is used in addition to the barrier generating means. However, in situations where the separation occurs near the trailing edge, the Gurney flap may be sufficient in itself.

The first and/or the additional zone, or the first and/or the additional strip may of course comprise a combination of any of the flow barrier generating means.

In one embodiment according to the invention, the blade comprises barrier generating means only in the first zone and optionally in the additional zones of additional cross-flows.

According to a second aspect, the invention provides a wind turbine rotor comprising a number, preferably two or three, of wind turbine blades according to any of the previously described embodiments. According to a third aspect, the invention provides a wind turbine comprising a number of blades according to any of the previously described embodiments or a wind turbine rotor according to the second aspect of the invention.

### Brief Description of the Drawings

The invention is explained in detail below with reference to the drawings, in which
Fig. 1 shows a wind turbine,
Fig. 2 shows a wind turbine blade according to the invention,
Fig. 3 shows a schematic view of an airfoil profile,
Fig. 4 shows a blade section of a first embodiment with barrier generating means according to the invention,
Fig. 5 shows a profile of a second embodiment with barrier generating means according to the invention,
Fig. 6 shows a profile of a third embodiment with barrier generating means according to the invention,
Fig. 7 shows a profile of a fourth embodiment with barrier generating means according to the invention,
Fig. 8 shows a profile of a fifth embodiment with barrier generating means according to the invention, and
Fig. 9 shows an arrangement of vane vortex generators for providing a barrier of airflow according to the invention.

### Detailed description of the Invention

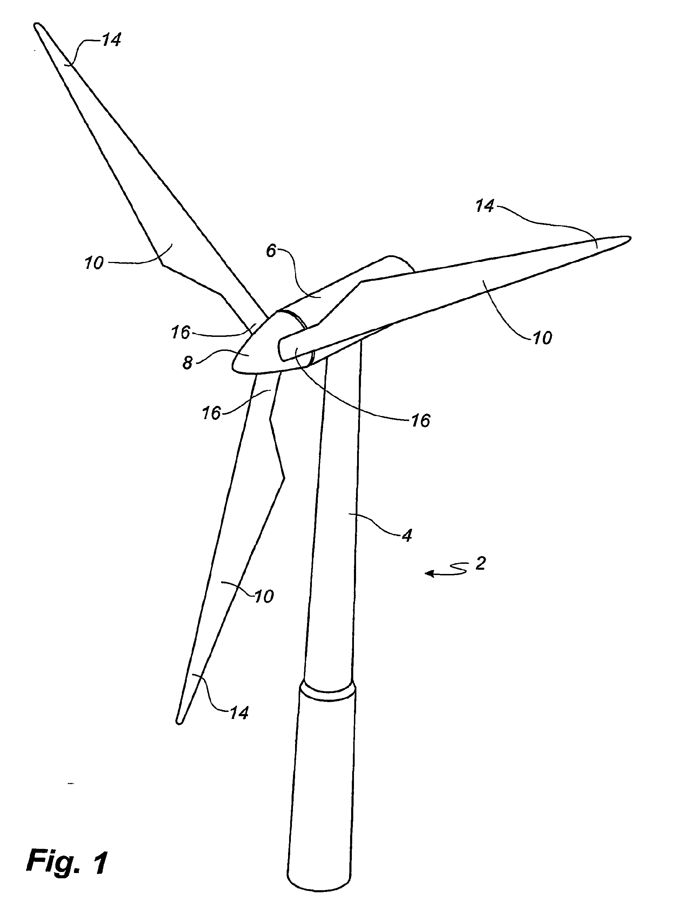

Fig. 1 illustrates a conventional modern wind turbine according to the so-called "Danish concept" with a tower 4, a nacelle 6, and a rotor with a substantially horizontal rotor shaft. The rotor includes a hub 8 and three blades 10 extending radially from the hub 8, each having a blade root 16 nearest the hub and a blade tip 14 furthest from the hub 8.

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward side and the leeward side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position d_{f} of the maximum camber f, the maximum airfoil thickness t, which is the largest diameter of the inscribed circles along the median camber line 62, the position dₜ of the maximum thickness t, and a nose radius (not shown). These parameters are typically defined as ratios to the chord length c.

Ideally, when the airfoil 50 is impacted by an incident airflow flowing from the leading edge 56 towards the trailing edge 68 in a substantially transverse direction of the blade, a reduced pressure is generated at the suction side 54 relative to the pressure side 52 so that a pressure differential is created between the suction side 54 and the pressure side 52, thus generating a lift. However, in practice a detachment of the airflow can occur, which will cause an increase in drag and a reduction of lift. This detachment usually occurs at the suction side 54 between the position dₜ of maximum thickness and the trailing edge 58 of the airfoil 50.

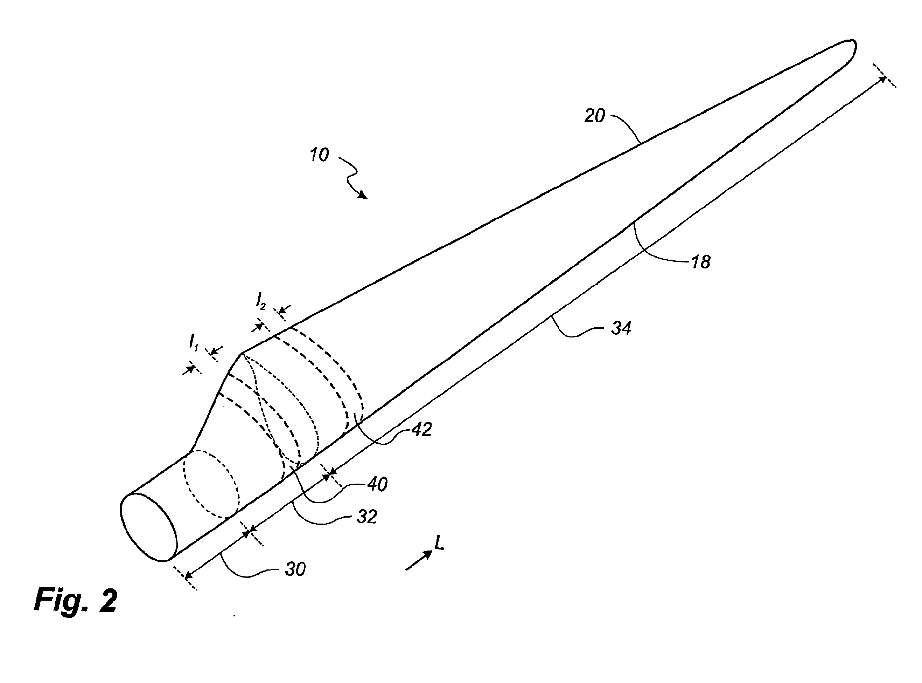

Fig. 2 shows a schematic view of an embodiment of a wind turbine according to the invention. The wind turbine blade 10 has the shape of a conventional wind turbine blade and comprises a root region 30 closest to the hub, a profiled or an airfoil region 34 furthest away from the hub, and a transition region 32 between the root region 30 and the region area 34. The blade 10 comprises a leading edge 18 facing the direction of rotation of the blade 10 when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 has a substantially circular or elliptical cross-section, which reduces loads from wind gusts and makes it easier and safer to mount the blade 10 to the hub. The diameter of the root region 30 is typically constant along the entire root area 30. The transition region 32 has a shape gradually changing from the circular or elliptical shape of the root region 30 to the airfoil profile of the airfoil region 34. The width of the transition region 32 typically increases substantially linearly with increasing distance L from the hub.

The airfoil region 34 has an airfoil profile with a chord extending between the leading edge 18 and the trailing edge 20 of the blade 10. The width of the chord decreases with increasing distance L from the hub. It should be noted that the chords of different sections of the blade do not necessarily lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Due to the non-ideal profile (with respect to generate lift) of the root region 30 and the transition region 32, flow detachment usually occurs in these regions. Due to rotational forces of the rotor, the airflow detachment may propagate towards the tip end 14 of the blade 10. Therefore, the blade 10 is provided with a number of barrier generating means adapted to generating a barrier of airflow extending in the chord direction and which prevents cross-flows of detached airflow to propagate beyond these barriers. The barrier generating means are preferably arranged so as to create a barrier of airflow extending at least from the position of maximum thickness to the trailing edge 18 of the blade 10.

The barrier generating means are arranged in a first zone 40 having a first longitudinal extend l₁ and/or in a second or additional zone 42 having a second longitudinal extent l₂. The longitudinal extents l₁, l₂ are approximately 0.5 to 1 meter. The barrier generating means arranged in the first zone 40 and the optional additional zone 42 may be of any of the embodiments shown in Figs. 4-8 or combinations thereof. Also, the barrier generating means in the two zones 40, 42 need not be of the same type.

Fig. 4 shows a blade section 100 (i.e. of the first zone or the second zone) of a first embodiment with barrier generating means according to the invention. The profile has a leading edge 102 and a trailing edge 104, and a first set of vortex generators 106 and a second set of vortex generators 108 are arranged on the suction side of the blade section 100. The vortex generators 106, 108 are here depicted as being of the vane type, but may be any other type of vortex generator. The vortex generators 106, 108 generate a barrier of airflow consisting of coherent turbulent structures, i.e. vortices propagating at the surface of the blade towards the trailing edge 104, which prevent cross-flows of detached airflow to propagate beyond the zone in which the vortex generators 106, 108 are arranged.

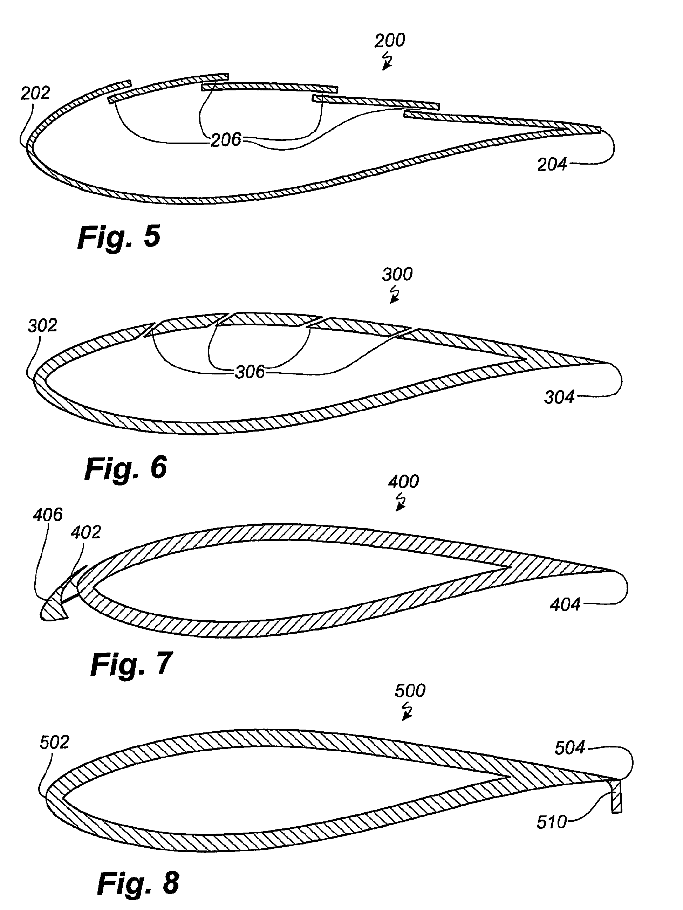

Fig. 5 shows a profile 200 of a second embodiment with barrier generating means according to the invention. In this embodiment, the barrier generating means consists of a number of ventilation holes 206 for blowing or suction between an interior of the blade and an exterior of the blade. The ventilation holes 206 can be utilised to create a belt of attached flow. The air vented from the ventilation holes 206 are used to energise and re-energise the boundary layer in order to maintain the flow attached to the exterior surface of the blade. The belt of attached flow acts as a barrier to a separated cross-flow by "catching" the cross-flow, which is thus forced to join the attached flow towards the trailing edge 204 instead of flowing outwards towards the tip end. The ventilation holes 206 are in this embodiment arranged substantially tangentially to the surface of the profile 200. The ventilation holes 206 may be provided as a series of holes in the longitudinal direction of the blade or as longitudinally extending slots.

Fig. 6 shows a profile 300 of a third embodiment with barrier generating means in form of ventilation holes 306. This embodiment corresponds to the second embodiment shown in Fig. 5, with the exception that the ventilation holes 306 are not arranged tangentially to the surface of the profile. The holes 306 are instead oriented in an angle compared to the surface, but still have a gradient pointing towards the trailing edge 304 of the profile 300, thereby ensuring that the vented air propagates substantially towards the trailing edge 304 of the profile instead of towards the blade tip of the blade.

Fig. 7 shows a profile 400 of a fourth embodiment with barrier generating means according to the invention. In this embodiment, the barrier generating means consists of a slat 406 arranged at the leading edge 402 of the profile 400. The slat points downwards towards the pressure side of the profile 402 and is utilised to create a local change in the inflow angle and airfoil lift, thereby causing the flow to remain attached to the surface of the blade. This attached "tunnel" for the flow creates a barrier, where the cross-flow is caught and thus forced to join the attached flow towards the trailing edge 404 instead of flowing outwards towards the tip end.

Fig. 8 shows a profile 500 of a fifth embodiment according to the invention. In this embodiment, the barrier profile 500 is additionally provided with a Gurney flap 510 arranged on the pressure side at the trailing edge 504 of the profile 500. This may further improve the performance of the blade.

Fig. 9 shows the arrangement of two pairs of vane vortex generators, which has shown to be particularly suited for generating a barrier of airflow in order to prevent cross-flows of detached airflow. The arrangement consists of a first pair of vane vortex generators 70 comprising a first vane 71 and a second vane 72, and a second pair of vane vortex generators 75 comprising a first vane 76 and a second vane 77. The vanes are designed as triangular shaped planar elements protruding from the surface of the blade and are arranged so that the height of the vanes increases towards the trailing edge of the blade. The vanes have a maximum height h, which lies in an interval of between 0.5% and 1% of the chord length at the vane pair arrangement. The vanes are arranged in an angle b of between 15 and 25 degrees to the transverse direction of the blade. Typically the angle b is approximately 20 degrees. The vanes of a vane pair are arranged so that the end points, i.e. the points nearest the trailing edge of the blade, are spaced with a spacing s in an interval of 2.5 to 3.5 times the maximum height, typically approximately three times the maximum height (s = 3h). The vanes have a length I corresponding to between 1.5 and 2.5 times the maximum height h of the vanes, typically approximately two times the maximum height (I = 2h). The vane pairs are arranged with a radial or longitudinal spacing z corresponding to between 4 and 6 times the maximum height h of the vanes, typically approximately five times the maximum height (z = 5h).

The invention has been described with reference to a preferred embodiment. However, the scope of the invention is not limited to the illustrated embodiment, and alterations and modifications can be carried out without deviating from the scope of the claims.

### List of reference numerals

In the numerals, x refers to a particular embodiment. Thus, for instance, 402 refers to the leading edge of the fourth embodiment.
- 2: wind turbine
- 4: tower
- 6: nacelle
- 8: hub
- 10: blade
- 14: blade tip
- 16: blade root
- 18: leading edge
- 20: trailing edge
- 30: root region
- 32: transition region
- 34: airfoil region
- 40: first zone
- 42: second zone / additional zone
- 50: airfoil profile
- 52: pressure side
- 54: suction side
- 56: leading edge
- 58: trailing edge
- 60: chord
- 62: camber line / median line
- 70: first pair of vane vortex generators
- 75: second pair of vane vortex generatos
- 71,72,76,77: vanes
- x00: blade profile
- x02: leading edge
- x04: trailing edge
- x06, 108: barrier generating means
- 510: Gurney flap

## Claims

1. A blade (10) for a rotor of a wind turbine (2) having a substantially horizontal rotor shaft, said rotor comprising a hub (8), from which the blade (10) extends substantially in a radial direction when mounted to the hub (8), the blade comprising:
- a profiled contour including a leading edge (18) and a trailing edge (20) as well as a pressure side and a suction side, the profiled contour when being impacted by an incident airflow generating a lift, wherein the profiled contour is divided into:
- a root region (30) with a substantially circular profile closest to the hub,
- an airfoil region (34) with a lift generating profile furthest away from the hub, and
- a transition region (32) between the root region (30) and the airfoil region (34), the profile of the transition region (32) gradually changing in the radial direction from the circular profile of the root region to the lift generating profile of the airfoil region,
**characterised in that**
a first barrier generating means (106) is arranged on the suction side of the blade (10) in the transition region (32) or in the airfoil region (34) in a part nearest the transition region (32), the first barrier generating means (106) being adapted to generate a barrier of airflow along a first strip, which extends essentially in a transverse direction of the blade (10) on the suction side of the blade (10), wherein the first barrier generating means are arranged with no barrier generating means on radial sides of the first barrier generating means.

2. A blade according to claim 1, wherein the first strip (40, 42) has a width, which lies in an interval between 20 cm and 2 m, or between 25 cm and 1.5 m, or between 30 cm and 1 m.

3. A blade according to any of the preceding claims, wherein said part of the airfoil region (34) nearest the transition region (32) is positioned within an inner 50%, or 35%, or 25% of the blade.

4. A blade according to any of the preceding claims, wherein the first barrier generating means is arranged in the transition region (32) only.

5. A blade according to any of the preceding claims, wherein the barrier generating means (106) is adapted to generate a barrier of airflow extending at least from an area of maximum relative profile thickness and the trailing edge (20) of the blade (10).

6. A blade according to any of the preceding claims, wherein the barrier generating means is adapted to generate a barrier of airflow extending substantially from the leading edge (18) to the trailing edge (20) of the blade (10).

7. A blade according to any of the preceding claims, wherein the blade further comprises an additional barrier generating means (106) arranged on the suction side of the blade (10) in the transition region (32) or in the airfoil region (34) in a part nearest the transition region (32), the additional barrier generating means (106) being adapted to generating a barrier of airflow along an additional strip, which extends essentially in a transverse direction of the blade (10) on the suction side of the blade (10).

8. A blade according to any of the preceding claims, wherein the first barrier generating means (106) and/or the second barrier generating means (106) comprise a number of turbulence generating means, such as a number of vortex generators.

9. A blade according to claim 8, wherein the number of turbulence generating means are adapted to provide vortices with a height corresponding to the height of cross-flows of detached airflow, which are inherently formed during normal use of the wind turbine blade.

10. A blade according to claim 8 or 9, wherein the turbulence generating means consists of two pairs of vane vortex generators.

11. A blade according to any of the preceding claims, wherein the first barrier generating means (x06) and/or the second barrier generating means (106) comprise a number of boundary layer control means.

12. A blade according to claim 11, wherein the boundary layer control means comprises a number of ventilation holes (206, 306) for blowing or suction between an interior of the blade and an exterior of the blade.

13. A blade according to claim 12, wherein the ventilation holes (206) are arranged substantially tangentially to the contour of the blade.

14. A blade according to any of the preceding claims, wherein the first barrier generating means and/or the second barrier generating means comprise a slat (406) arranged at the leading edge of the blade.

15. A blade according to any of the preceding claims, wherein the first zone (40, 42) and/or the second zone (40, 42) comprise a Gurney flap arranged at the trailing edge (20) and on the pressure side of the blade.

## Patentansprüche

1. Rotorblatt (10) für einen Rotor einer Windturbine (2), die eine im wesentlichen horizontale Rotorwelle besitzt, wobei der Rotor eine Nabe (8) aufweist, von der sich das Rotorblatt (10) im wesentlichen in radialer Richtung erstreckt, wenn es an der Nabe (8) montiert ist, wobei das Rotorblatt folgendes aufweist:
- eine profilierte Kontur mit einer Vorderkante (18) und einer Hinterkante (20) sowie einer Druckseite und einer Ansaugseite, wobei die profilierte Kontur einen Hub erzeugt, wenn sie mit einer auftreffenden Luftströmung beaufschlagt wird, wobei die profilierte Kontur folgendermaßen unterteilt ist in:
-- einen Wurzelbereich (30) mit einem im wesentlichen kreisförmigen Profil, der der Nabe am nächsten liegt,
-- einen Tragflächenbereich (34) mit einem einen Hub erzeugenden Profil, der von der Nabe am weitesten entfernt ist, und
-- einen Übergangsbereich (32) zwischen dem Wurzelbereich (30) und dem Tragflächenbereich (34), wobei das Profil des Übergangsbereichs (32) sich in der radialen Richtung von dem kreisförmigen Profil des Wurzelbereichs zu dem einen Hub erzeugenden Profil des Tragflächenbereichs allmählich ändert,
**dadurch gekennzeichnet,**
**dass** Einrichtungen (106) zum Erzeugen einer ersten Barriere auf der Ansaugseite des Rotorblatts (10) in dem Übergangsbereich (32) oder in dem Tragflächenbereich (34) in einem Bereich angeordnet sind, der dem Übergangsbereich (32) am nächsten liegt, wobei die Einrichtungen (106) zum Erzeugen einer ersten Barriere dazu ausgelegt sind, eine Barriere für eine Luftströmung längs eines ersten Streifens zu erzeugen, der sich im wesentlichen in einer Querrichtung des Rotorblatts (10) auf der Ansaugseite des Rotorblatts (10) erstreckt, wobei die Einrichtungen zum Erzeugen einer ersten Barriere an den radialen Seiten der Einrichtungen zum Erzeugen der ersten Barriere ohne Barrieren-Erzeugungseinrichtungen angeordnet sind.

2. Rotorblatt nach Anspruch 1,
wobei der erste Streifen (40, 42) eine Breite besitzt, die in einem Bereich zwischen 20 cm und 2 m, oder zwischen 25 cm und 1,5 m, oder zwischen 30 cm und 1 m liegt.

3. Rotorblatt nach einem der vorhergehenden Ansprüche,
wobei der Bereich des Tragflächenbereiches (34), der dem Übergangsbereich (32) am nächsten liegt, innerhalb von inneren 50 % oder 35 % oder 25 % des Rotorblatts positioniert ist.

4. Rotorblatt nach einem der vorhergehenden Ansprüche,
wobei die Einrichtungen zum Erzeugen einer ersten Barriere nur in dem Übergangsbereich (32) angeordnet sind.

5. Rotorblatt nach einem der vorhergehenden Ansprüche,
wobei die Einrichtungen (106) zum Erzeugen einer Barriere dazu ausgelegt sind, eine Barriere für eine Luftströmung zu erzeugen, die sich zumindest von einem Bereich der maximalen relativen Profildicke zu der Hinterkante (20) des Rotorblatts (10) erstreckt.

6. Rotorblatt nach einem der vorhergehenden Ansprüche,
wobei die Einrichtungen zum Erzeugen einer Barriere dazu ausgelegt sind, eine Barriere für eine Luftströmung zu erzeugen, die sich im wesentlichen von der Vorderkante (18) zu der Hinterkante (20) des Rotorblatts (10) erstreckt.

7. Rotorblatt nach einem der vorhergehenden Ansprüche,
wobei das Rotorblatt ferner Einrichtungen (106) zum Erzeugen einer zusätzlichen Barriere aufweist, die an der Ansaugseite des Rotorblatts (10) in dem Übergangsbereich (32) oder in dem Tragflächenbereich (34) in einem Bereich angeordnet sind, der dem Übergangsbereich (32) am nächsten liegt, wobei die Einrichtungen (106) zum Erzeugen einer zusätzlichen Barriere dazu ausgelegt sind, eine Barriere für eine Luftströmung längs eines zusätzlichen Streifens zu erzeugen, der sich im wesentlichen in einer Querrichtung des Rotorblatts (10) auf der Ansaugseite des Rotorblatts (10) erstreckt.

8. Rotorblatt nach einem der vorhergehenden Ansprüche,
wobei die Einrichtung (106) zum Erzeugen einer ersten Barriere und/oder die Einrichtungen (106) zum Erzeugen einer zweiten Barriere eine Anzahl von Turbulenzerzeugungseinrichtungen aufweisen, wie z. B. eine Anzahl von Wirbelgeneratoren.

9. Rotorblatt nach Anspruch 8,
wobei die Anzahl von Turbulenzerzeugungseinrichtungen dazu ausgelegt sind, Wirbel mit einer Höhe zu erzeugen, die der Höhe von Querströmungen einer abgelösten Luftströmung entspricht, die während des Normalbetriebs des Rotorblatts der Windturbine inhärent gebildet wird.

10. Rotorblatt nach Anspruch 8 oder 9,
wobei die Turbulenzerzeugungseinrichtungen aus zwei Paaren von Flügel-Wirbelgeneratoren bestehen.

11. Rotorblatt nach einem der vorhergehenden Ansprüche,
wobei die Einrichtungen (106) zum Erzeugen einer ersten Barriere und/oder die Einrichtungen (106) zum Erzeugen einer zweiten Barriere eine Anzahl von Grenzschicht-Steuereinrichtungen aufweisen.

12. Rotorblatt nach Anspruch 11,
wobei die Grenzschicht-Steuereinrichtungen eine Anzahl von Luftzuführungslöchern (206, 306) zum Einblasen oder Ansaugen zwischen einer Innenseite des Rotorblatts und einer Außenseite des Rotorblatts aufweisen.

13. Rotorblatt nach Anspruch 12,
wobei die Luftzuführungslöcher (206) im wesentlichen tangential zu der Kontur des Rotorblatts angeordnet sind.

14. Rotorblatt nach einem der vorhergehenden Ansprüche,
wobei die Einrichtungen zum Erzeugen einer ersten Barriere und/oder die Einrichtungen zum Erzeugen einer zweiten Barriere eine Leiste (406) aufweisen, die an der Vorderkante des Rotorblatts angeordnet ist.

15. Rotorblatt nach einem der vorhergehenden Ansprüche,
wobei die erste Zone (40, 42) und/oder die zweite Zone (40, 42) eine Gurney-Klappe aufweist, die an der Vorderkante (20) und auf der Druckseite des Rotorblatts angeordnet ist.

## Revendications

1. Pale (10) pour un rotor d'une turbine éolienne (2) ayant un arbre de rotor sensiblement horizontal, ledit rotor comprenant un moyeu (8), depuis lequel la pale (10) s'étend sensiblement dans une direction radiale quand elle est montée sur le moyeu (8), la lame comprenant :
un contour profilé incluant un bord d'attaque (18) et un bord de fuite (20) ainsi qu'une côté de pression et un côté d'aspiration, le contour de profil étant impacté par un flux d'air incident générant une portance, dans laquelle le contour profilé est divisé en :
une région d'emplanture (30) avec une profil sensiblement circulaire au plus du moyeu,
une région de profil aérodynamique (34) avec une profil générant une portance au plus loin du moyeu, et
une région de transition (32) entre la région d'emplanture (30) et la région de profil aérodynamique (34), le profil de la région de transition (32) changeant progressivement dans la direction radiale du profil circulaire de la région d'emplanture au profil générant une portance de la région de profil aérodynamique,
**caractérisé en ce que**
des premiers moyens générant une barrière (106) sont agencés sur le côté d'aspiration de la pale (10) dans la région de transition (32) ou dans la région de profil aérodynamique (34) dans une partie la plus proche de la région de transition (32), les premiers moyens générant une barrière (106) étant adaptés pour générer une barrière d'écoulement d'air le long d'une première bande, qui s'étend sensiblement dans une direction transversale de la pale (10) sur le côté d'aspiration de la pale (10), dans laquelle les premiers moyens générant une barrière sont agencés sans moyens générant une barrière sur des côtés radiaux des premiers moyens générant une barrière.

2. Pale selon la revendication 1, dans laquelle la première bande (40, 42) a une largeur, située dans un intervalle entre 20 cm et 2 m, ou entre 25 cm et 1,5 m, ou entre 30 cm et 1 m.

3. Pale selon l'une quelconque des revendications précédentes, dans laquelle ladite partie de la région de profil aérodynamique (34) la plus près de la région de transition (32) est positionnée dans les 50%, ou 35%, ou 25% intérieurs de la pale.

4. Pale selon l'une quelconque des revendications précédentes, dans laquelle les premiers moyens générant une barrière sont agencés dans la région de transition (32) seulement.

5. Pale selon l'une quelconque des revendications précédentes, dans laquelle les moyens générant une barrière (106) sont adaptés pour générer une barrière d'écoulement d'air s'étendant au moins depuis une zone d'épaisseur de profil relatif maximum et le bord de fuite (20) de la pale (10).

6. pale selon l'une quelconque des revendications précédentes, dans laquelle les moyens générant une barrière sont adaptés pour générer une barrière d'écoulement d'air s'étendant sensiblement depuis le bord d'attaque (18) jusqu'au bord de fuite (20) de la pale (10).

7. Pale selon l'une quelconque des revendications précédentes, dans laquelle la pale comprend en outre des moyens générant une barrière (106) supplémentaires agencés sur le côté d'aspiration de la pale (10) dans la région de transition (32) ou dans la région de profil aérodynamique (34) dans une partie la plus proche de la région de transition (32), les moyens générant une barrière (106) supplémentaires étant adaptés pour générer une barrière d'écoulement d'air le long d'une bande supplémentaire, qui s'étend sensiblement dans une direction transversale de la pale (10) sur le côté d'aspiration de la pale (10).

8. Pale selon l'une quelconque des revendications précédentes, dans laquelle les premiers moyens générant une barrière (106) et/ou les seconds moyens générant une barrière (106) comprennent un certain nombre de moyens de génération de turbulences, comme un certain nombre de générateurs de vortex.

9. Pale selon la revendication 8, dans laquelle le certain nombre de moyens de génération de turbulences sont adaptés pour former des vortex avec une hauteur correspondant à la hauteur des écoulements transversaux du flux d'air détaché, qui sont fondamentalement formes pendant une utilisation normale de la pale de turbine éolienne.

10. Pale selon la revendication 8 ou 9, dans laquelle les moyens de génération de turbulences consistent en deux paire de générateurs de vortex à ailettes.

11. Pale selon l'une quelconque des revendications précédentes, dans laquelle les premiers moyens générant une barrière (106) et/ou les seconds moyens générant une barrière (106) comprennent un certain nombre de moyens de commande de couche limite.

12. Pale selon la revendication 11, dans laquelle les moyens de commande de couche limite comprennent un certain nombre de trous de ventilation (206, 306) pour souffler ou aspirer entre un intérieur de la pale et un extérieur de la pale.

13. Pale selon la revendication 12, dans laquelle les trous de ventilation (206) sont agencés sensiblement tangentiellement au contour de la pale.

14. Pale selon l'une quelconque des revendications précédentes, dans laquelle les premiers moyens générant une barrière et/ou les seconds moyens générant une barrière comprennent un bec (406) agencé au niveau du bord d'attaque de la pale.

15. Pale selon l'une quelconque des revendications précédentes, dans laquelle la première zone (40, 42) et/ou la seconde zone (40, 42) comprennent un volet Gurney agencé au niveau du bord de fuite (20) et sur le côté de pression de la pale.
